# EUROPEAN PATENT APPLICATION

(11) **EP 4 450 278 A1**
(43) Date of publication of application: **23.10.2024**
(21) Application number: 24167422.5
(22) Date of filing: 28.03.2024
(51) Int. Cl.: B32B 21/10, B32B 5/02, B32B 7/02, B32B 7/027, B32B 7/03, B32B 7/12, B32B 21/14

(54) **REINFORCED PLYWOOD, METHOD OF PRODUCING THEREOF AND USE THEREOF**

(30) Priority: 17.04.2023 PL 44443523
(71) Applicant: Paged Labtech Spolka Z Ograniczona Odpowiedzialnoscia, 12-200 Pisz (PL)
(72) Inventor: Depczynska, Ewelina, 18-500 Wykowo (PL); Sasin, Mateusz, 06-320 Gaczyska (PL)
(74) Representative: JWP Patent & Trademark Attorneys

(57) **Abstract**

A reinforcement plywood (1) having a layered structure, the sheets (4, 5, 14, 15, 16, 17, 18) and reinforcing layers (2) of which are connected together with a binder, wherein the plywood (1) comprises, within the stack of the layers, at least one wooden veneer sheet and at least one reinforcing layer (2), characterized in that the reinforcing layer (2) is an epoxy-fabric layer.

A method of producing the plywood (1), characterized in that, before covering with the binder and arranging the stack of the sheets with the at least one wooden veneer layer and the at least one reinforcing layer (2), the reinforcing layer (2) is obtained by covering the reinforcing fabric with an epoxy resin and disposing it between layers of a separating film (6) and between stops (7), wherein the layers of the film (6), the epoxy resin-covered fabric and the stops (7) are positioned on a plate (8) and overlaid tightly with a vacuum bag (9). On the top layer of the film (6), a pressure plate (12) is arranged on which a draining fabric (13) is disposed; then, a negative pressure is generated within the vacuum bag (9) and the reinforcing layer (2) is left at a temperature of 20-100°C for a period of 4-24h, whereupon the reinforcing layer (2) thus prepared is stacked with the wooden veneer layers, wherein the binder is spread between the successive layers of the stack, whereupon the stack of the layers thus prepared is subjected to a pressure of 12-18 bar at a temperature of 120-130°C for a period of 15-25 minutes to form the plywood (1).

## Description

The subject of the present invention is a reinforced plywood, having reinforcing layers between layers of wooden veneer or on the surface of the plywood, a method of producing the plywood according to the present invention and use of the plywood for forming floor surfaces of trailers, semi-trailers, other means of freight transport and as floor sheathing elements and structural elements usable in the building industry.

Wooden plywoods, including reinforced wooden plywoods, are known from the patent literature in which reinforcing layers are disposed between the successive layers produced of wood, also methods of producing thereof and uses thereof as cargo space floor elements are known from state of art.

By way of example, a multi-layered plywood is known from the patent description CN113119243 A having seven layers, wherein the first, fourth and seventh layers are wooden layers with one direction of the fibres, the third and fifth layers are wooden layers with a direction of the fibres perpendicular to the other wooden layers, and the second and sixth layers are layers of carbon fibre. As disclosed, the individual layers are connected with a diisocyanate binder.

Patent US2006166025, in turn, discloses a plywood formed from wood veneer layers and carbon fabric layers. As disclosed, the arrangement of the layers is alternating, wherein the outermost layers are the layers of veneer. Moreover, there are adhesive layers between the plywood layers and the fabric layers.

The patent application DE102005040419 discloses a layered board having a core part of balsa wood, used to form cargo space floor parts of vehicles. As disclosed, the floor element has a support frame comprising longitudinal and transverse bars with a base attached to the bars, where a major portion of the base is made of plywood. A layer of reinforced fibres made of a non-lignosic material is attached to the base. The layer of reinforced fibres is arranged between layers made of plywood.

On the other hand, a floor of a transport platform, formed of plywood, is known from the description of the utility model CN2276897.

In turn, a method of producing a layered material of wood is known from the patent application WO9849248 which comprises producing layered products of wood, comprising reinforcing layers of glass fibre and epoxy resin. As disclosed, the method of producing comprises impregnating a mat of glass fibre with a B stage-epoxy resin, depositing the impregnated mat on a wooden layer which may be plywood, building timber, LVL, or chipboard between at least two wooden layers, and subjecting the laminate to pressure and temperature to achieve a connection of the layers. It is also disclosed that the resin may be a phenolic resin, the non-woven fabric may have ordered and disordered fibres, the hardening of the resin may occur at a temperature of 100 to 160 °F or 140°C, the finished plywood (as the wooden layer) may have from 3 to 15 veneers, and that the mat may be applied between the top layers of the plywood, the bottom layers of the plywood, or between the both outermost layers.

The solutions known from the prior art possess a number of inconveniences. The known solutions, for the applications in transport as a cargo space floor, require the use of a plywood with a relatively large thickness and therefore weight as well, which negatively affects the transport capabilities of a vehicle through a reduction in the overall dimensions available inside the cargo space and an increase in the fuel consumption per weight unit of the carried goods.

The aim of the present invention is to develop the structure of a plywood for use as a floor or as other structural elements in the cargo space of a truck or similar means of transport while providing a reduction in the weight of the plywood used on the floor while maintaining the static bending strength and the elastic modulus appropriate for a plywood of a larger thickness. Additionally, the aim of the present invention is to develop a plywood in which the reinforcing layer is protected against mechanical damage in the event of heavy, hard objects falling on the plywood and in the event of the plywood being snagged by sharp elements of the carried load.

Unexpectedly for persons skilled in the art, the technical problem thus posed was successfully solved by using a reinforcing layer comprising a carbon fabric or basalt fabric, impregnated with an epoxy resin, in an arrangement of a stack of layers that form the plywood and by developing a method of producing a reinforcing layer of carbon or basalt fabric impregnated with an epoxy resin.

In accordance with the present invention, the reinforced plywood has a layered structure, wherein the mutually adjacent layers of the stack of layers that forms the plywood are connected together with a binder, wherein the plywood comprises, within the stack of layers, at least one wooden veneer sheet and at least one reinforcing layer, wherein the reinforcing layer is an epoxy-fabric layer.

Preferably, the wooden veneer sheets arranged in the stack are oriented in such a manner that the direction of the fibres of one wooden veneer sheet is perpendicular to the direction of the arrangement of the fibres of the second wooden veneer sheet, preferably adjacent thereto, within the stack, wherein the direction of the wood fibres of the wooden veneer sheets in the plywood according to the present invention may be alternating, with the direction of extension of the fibres between the two mutually adjacent sheets being rotated by 90°. In accordance with the present invention, it is also permissible for the directions of extension of the wood fibres of the two or more mutually adjacent wooden veneer sheets to be substantially parallel to each other, and it is also permissible to combine the arrangements in which a portion of the veneer sheets that form the stack are positioned relative to each other such that a parallel extension of the wood fibres of the mutually adjacent veneer sheets is maintained and another portion of the veneer sheets are positioned in such a manner that the direction of extension of the wood fibres is perpendicular within the same stack of the wooden veneer sheets or in such a manner that a portion of the stack of the veneer sheets has a parallel arrangement of the fibres and a portion of the veneer sheets have an alternating arrangement of the fibres (that is rotated by 90° relative to the adjacent sheet).

Preferably, the fabric forming the epoxy-fabric layer is a carbon fabric.

Preferably, the fabric forming the epoxy-fabric layer is a basalt fabric.

Preferably, the binder of the layers within the stack of the layers (sheets) that form the plywood is a phenol-formaldehyde resin-based adhesive.

Preferably, the binder of the layers within the stack of the layers that form the plywood is a lignin adhesive.

It should be pointed out that the terms: top, outer, first, second, third, bottom, or similar terms, used in the further part of the description of the present invention, should be understood as determining the place (order) of arrangement of a given sheet or layer or determining the position of a given surface relative to the stack of the layers (sheets) that form a given, exemplary, layered arrangement of the plywood according to the present invention.

Preferably, the stack of the layers of the plywood comprises the reinforcing layer on the outer surface of a top wooden veneer sheet.

Preferably, the stack of the layers of the plywood comprises the reinforcing layer on the outer surface of a first top wooden veneer sheet and the outer surface of a first bottom wooden veneer sheet.

Preferably, the stack of the layers of the plywood comprises the reinforcing layer between the first and a second top wooden veneer sheet.

Preferably, the stack of the layers of the plywood comprises the reinforcing layer between the first and the second top wooden veneer sheet and between the first and a second bottom wooden veneer sheet.

Preferably, the stack of the layers of the plywood comprises a reinforcement layer between the second and a third top wooden veneer sheet and between the second and a third bottom wooden veneer sheet.

Preferably, the plywood of the present invention is used to produce cargo space floor elements of a vehicle.

Preferably, the plywood according to the present invention is used in the building industry for the production of a floor covering of a building facility.

Preferably, the plywood of the present invention is used to produce structural elements for the building industry.

In accordance with the present invention, the method of producing the plywood of the present invention comprises preparing at least one wooden veneer sheet of a desired length and width and preparing at least one reinforcing layer, wherein the length and width of the reinforcing layer correspond to the length and width of the of wooden veneer sheet or sheets utilized to form the plywood therefrom. Successively, the surfaces of the layers of the plywood that are to be mutually adjacent within the stack are covered with a binder, and the at least one wooden veneer sheet and the at least one reinforcing layer that are covered with the binder are stacked in the required order and amount of the layers.

Then, the stack of the layers is subjected to pressing under pressure, at an elevated temperature, for a specified period of time, wherein before covering with the binder and arranging the stack of the wooden veneer layers, the reinforcing layer is obtained by covering the reinforcing fabric, preferably a carbon or basalt fabric, with an epoxy resin and disposing it between layers of a separating film and between stops, wherein the layers of the film and the stops form a closed space inside which the epoxy resin-covered fabric, which is ultimately to be the reinforcing layer, is situated. The layers of the film, the epoxy resin-covered fabric and the stops are positioned on a plate, pressed, by convention, from the top with a pressure plate and overlaid tightly with a vacuum bag, the edge of which is sealed to the plate with a sealing butyl tape, and then a negative pressure is generated within the vacuum bag, with a value of from -0.6 to -1.0 bar relative to the atmospheric pressure of the atmospheric pressure value, and the reinforcing layer is left at a temperature of 20-100°C for a period of 4-24h, wherein the curing time depends on the epoxy resin-curing agent pair used and the temperature at which the bonding and curing of the reinforcing layer occur, wherein, as is apparent to a person skilled in the art, in the case of the known systems of epoxy resins mixed with a curing agent, their acceptable temperature conditions and, consequently, their bonding time varies depending on the resin used, which does not affect the essence of the present solution.

The reinforcing layer thus prepared is stacked with the wooden veneer layers, wherein the amount, order and direction of extension of the wooden fibres of the arranged layers depend on the target requirements for the structure of the plywood to be produced, wherein the binder is spread between the successive layers of the stack, whereupon the stack of the layers thus prepared is subjected to a pressure of 10 to 18 bar at a temperature of 120 to 130°C for a period of 10 to 25 minutes to form the plywood.

Preferably, the fabric used in the method of the present invention is a carbon fabric.

Preferably, the fabric used in the method of the present invention is a basalt fabric.

Preferably, the binder used in the method according to the present invention is a phenol-formaldehyde resin-based adhesive.

Preferably, the binder used in the method of the present invention is a lignin adhesive.

Preferably, the plywood obtained by the method according to the present inventions is used to produce cargo space floor elements of a vehicle.

Preferably, the plywood obtained by the method of the present invention is used in the building industry for the floor covering production.

Preferably, the plywood obtained by the method of the present invention is used to produce structural elements for the building industry.

Preferably, the sheets of the plywood of the present invention, produced by the method of the present invention, are used to cover the cargo space floor of transport vehicles, trailers, and also as floor covering, preferably in buildings with wooden ceilings and further preferably, from the sheets of the plywood of the invention, by cutting into desired fragments, structural elements, including poles, girts, lintels or sill plates, preferably for buildings with modular walls with a wooden (or wood-based) structure, are produced for the building industry.

The present solution disclosed fully solves the technical issue, as addressed thereby, by providing a plywood from wooden veneer sheets, provided with at least one reinforcing layer, the use of which within the stack of the layers of the plywood allows for obtaining a plywood with a static bending strength and an elastic modulus appropriate for a plywood of larger thickness while lowering the weight of the plywood due to the possibility of a practical use of a plywood of a smaller thickness, which, in use in the transport of goods, leads to fuel savings and an increase in the available cargo space, especially within closed means of transport of goods, and, in the building applications, reduces the weight of the structure or structural elements while maintaining the desired mechanical parameters.

The object of the present invention is disclosed in the accompanying drawings, in which:

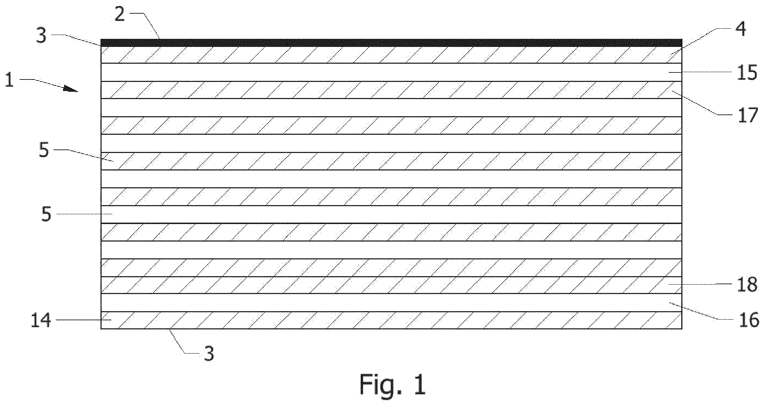

- fig. 1 shows an arrangement of the layers of the plywood according to the present invention in a first embodiment,

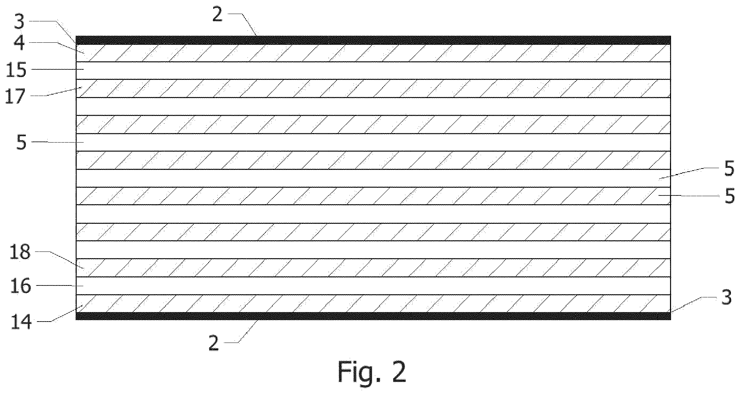

- fig. 2 - an arrangement of the layers of the plywood according to the present invention in a second embodiment,

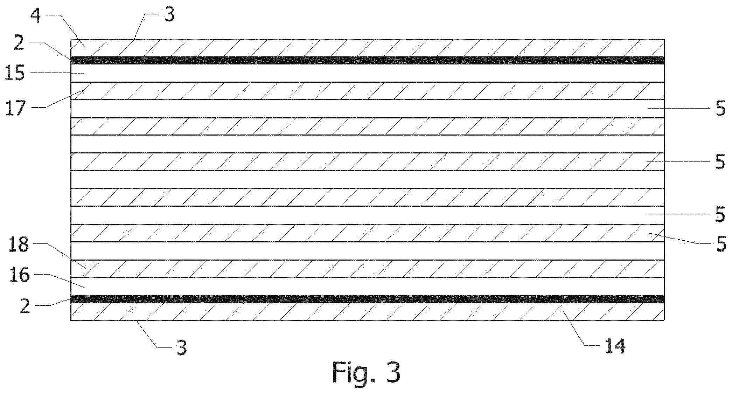

- fig. 3 - an arrangement of the layers of the plywood according to the present invention in a third embodiment,

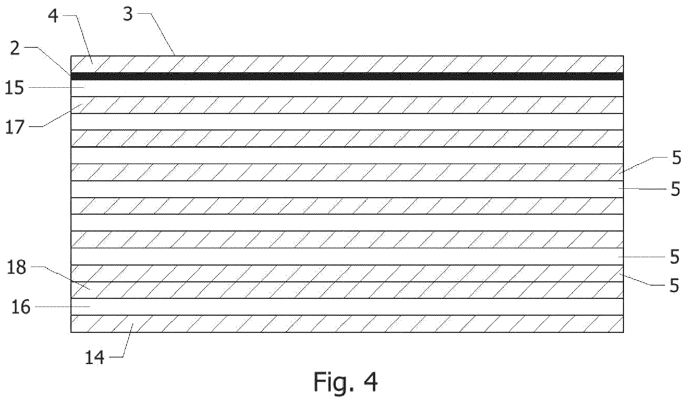

- fig.4 - an arrangement of the layers of the plywood according to the present invention in a fourth embodiment,

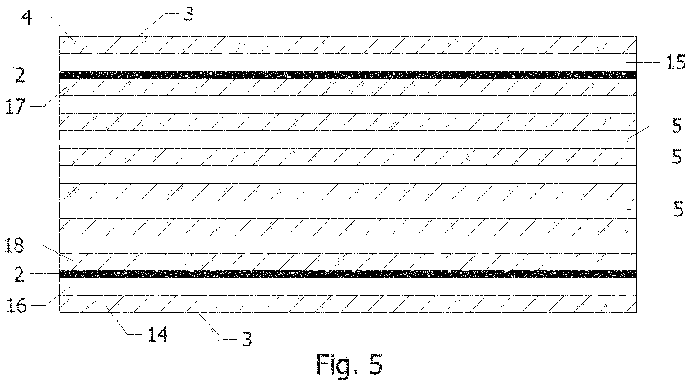

- fig.5 - an arrangement of the layers of the plywood according to the present invention in a fifth embodiment,

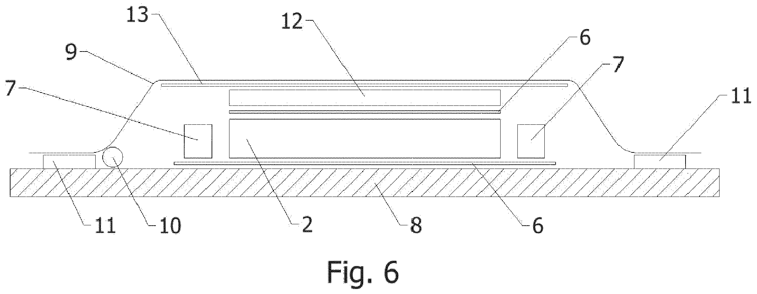

- fig.6 - a diagram of a station for forming the reinforcing layer and a composite with the reinforcing layer.

In the first embodiment of the present invention, a plywood 1 was prepared comprising a reinforcing layer 2 on the outer surface 3 of a top wooden veneer sheet 4. For this purpose, veneer sheets 4, 5, 14, 15, 16, 17, 18 were prepared and the reinforcing layer 2 was prepared by covering a carbon fabric with an epoxy resin and disposing it between layers of a separating film 6 and between stops 7 forming a closed forming space established on a plate 8 and overlaid tightly with a vacuum bag 9 with a valve 10 connected to a vacuum pump, wherein the vacuum bag 9 is connected to the plate 8 with a sealing tape 11. On the, by convention, top layer of the separating film 6, a pressure plate 12 was disposed on which a draining fabric 13 is arranged. Then, a negative pressure was generated within the vacuum bag 9, with a value of -0.6 bar, and the reinforcing layer 2 was left at a temperature of 30°C for a period of 12h.

The reinforcing layer 2 thus prepared was stacked with the wooden veneer sheets 4, 5, 14, 15, 16, 17, 18, wherein the wooden veneer sheets 4, 5, 14, 15, 16, 17, 18 were stacked in an alternating fashion for a perpendicular arrangement of the fibres of the two mutually adjacent wooden veneer sheets 4, 5, 14, 15, 16, 17, 18, except for the third 18 and the fourth, from the bottom, wooden veneer sheet 5 which were arranged in such a manner that their arrangements of fibres were parallel to each other, wherein the reinforcing layer 2 was arranged on the top of the stack, on the outer surface 3 of the wooden veneer sheet 4, wherein a lignin adhesive was distributed between the successive veneer sheets 4, 5, 14, 15, 16, 17, 18, and between the reinforcing layer 2 and the outer surface 3 of the wooden veneer sheet 4. The stack of the wooden veneer sheets 4, 5, 14, 15, 16, 17, 18, thus formed and disposed on the outer surface 3 of the top sheet 4 of the reinforcing layer 2 was subjected to a press pressure with a value of 10 bar at a temperature of 120°C for a period of 15 minutes. In this manner, the plywood 1 from the wooden veneer sheets 4, 5, 14, 15, 16, 17, 18 was obtained provided with an epoxy-carbon reinforcing layer 2 on the outer surface 3 of the top sheet 4 of the stack. From the plywood 1 thus obtained, floor boards for a known transport semi-trailer were then formed by cutting out boards with dimensions matching the floor support frame of the semi-trailer from the plywood which were then arranged on the frame and affixed thereto with threaded fasteners.

In the second embodiment, based on the first example, two reinforcing layers 2 of an epoxy resin-impregnated basalt fabric were prepared, wherein the impregnation in the vacuum bag 9 was conducted at a pressure of -1.0 bar, at a temperature of 80°C, for 8h, whereupon the reinforcing layers 2 thus prepared were disposed on the bottom and on the top of the stack of the wooden veneer sheets 4, 5, 14, 15, 16, 17, 18, wherein the binder between the successive veneer sheets 4, 5, 14, 15, 16, 17, 18 and between the veneer sheets 4, 14 and the reinforcing layers 2 was constituted by a phenol-formaldehyde resin-based adhesive. The stack of the sheets 4, 5, 14, 15, 16, 17, 18 and the reinforcing layers 2, thus obtained, was then subjected to a press pressure with a value of 18 bar, at a temperature of 130°C for a period of 25 minutes, thus obtaining the plywood 1 from the wooden veneer sheets 4, 5, 14, 15, 16, 17, 18, with two epoxy-basalt reinforcing layers 2 on the outer surface 3 of the top sheet 4 and on the outer surface 3 of the bottom sheet 14.

In the third embodiment, two reinforcing layers 2 of an epoxy resin-impregnated basalt fabric was obtained with the method of the present invention under negative pressure conditions of -0.8 bar at a temperature of 20°C for a period of 12h, which reinforcing layers 2 were then disposed in the stack of the wooden veneer sheets 4, 5, 14, 15, 16, 17, 18 in such a manner that the reinforcing layer 2 was located between the top sheet 4 of the veneer and the second top sheet 15 and between the bottom sheet 14 of the veneer and the second bottom sheet 16 of the veneer. In this embodiment, the binder connecting the individual veneer sheets 4, 5, 14, 15, 16, 17, 18 and the reinforcing layers 2 is a lignin adhesive. The final forming of the plywood 1 was conducted at a pressure of 16 bar, at a temperature of 120 °C, for a period of 20 minutes. From the sheets of the plywood 1, thus obtained, floor support boards were then produced for a building with a wooden ceiling between the building storeys.

In the fourth embodiment of the present invention, one reinforcing layer 2 of an epoxy resin-impregnated carbon fabric was obtained by the method of the present invention, wherein the impregnation was conducted at a negative pressure of -1.0 bar, at a temperature of 20°C for 12h, whereupon the reinforcing layer 2 thus prepared was disposed in the stack of the veneer sheets 4, 5, 14, 15, 16, 17, 18 in such a manner that it was located between the top veneer sheet 4 and the second top veneer sheet 15. A phenol-formaldehyde resin-based adhesive was used as the binder. The final forming of the plywood was conducted under a pressure of 18 bar, at a temperature of 130°C, for a period of 25 minutes. From the sheets of the plywood 1, thus obtained, by cutting the sheets of the plywood 1 into longitudinal sections, poles, sill plates, girts and lintels were then produced for the wooden frame walls of a modular building.

In the fifth embodiment, two reinforcing layers 2 of an epoxy resin-impregnated basalt fabric were obtained by the method of the present invention, wherein the impregnation was conducted at a negative pressure of -0.6 bar, at a temperature of 20°C for 12h, whereupon the reinforcing layers 2 thus prepared were disposed in the stack of the wooden veneer sheets 4, 5, 14, 15, 16, 17, 18 in such a manner that one reinforcing layer 2 was located between the second top 15 and the third top 17 wooden veneer sheet and the second reinforcing layer 2 was located between the second bottom 16 and the third bottom 18 wooden veneer sheet in the stack, wherein a lignin adhesive was used as the binder, and the final forming of the plywood 1 was conducted at a pressure of 12 bar, at a temperature of 120°C for a period of 15 minutes. In this manner, a multi-layered plywood 1 from the wooden veneer sheets 4, 5, 14, 15, 16, 17, 18 was obtained with the reinforcing layers 2 between the second 15 and the third 17 top sheet and between the second 16 and the third 18 bottom veneer sheet.

It is apparent to a person skilled in the art that in the recited embodiments of the present invention, any amount of the wooden veneer sheets 5 is permissible between the wooden veneer sheets surrounding the reinforcing layers or layer 2, and further different arrangements of the order of the layers 2 and the sheets are permissible within the stack and so is the mutual positioning of the individual veneer sheets 5 in the aspect of the direction of extension of the wood fibres of the mutually adjacent sheets of the wooden veneer 5 from which the plywood 1 is formed, which does not affect the essence of the present solution and only constitutes a further preferable development thereof. Furthermore, it is apparent to a person skilled in the art that within the plywood 1 according to the present invention, produced by the method according to the present invention, it is possible to use more than two reinforcing layers 2, including the layers produced of both the carbon fabric and the basalt fabric within one plywood 1, which also constitutes a further preferable development of the essence of the present invention.

## Claims

1. A reinforced plywood having a layered structure, wherein the mutually adjacent layers of the stack of layers that forms the plywood are connected together with a binder, wherein the plywood comprises, within the stack of the layers, at least one wooden veneer sheet and at least one reinforcing layer, **characterized in that** the reinforcing layer (2) is an epoxy-fabric layer.

2. The plywood according to claim 1, **characterized in that** the fabric forming the epoxy-fabric layer is a carbon fabric or a basalt fabric.

3. The plywood according to claim 1 or 2, **characterized in that** the binder is a phenol-formaldehyde resin-based adhesive or a lignin adhesive.

4. The plywood according to any one of claims 1 to 3, **characterized in that** the stack of the layers of the plywood (1) comprises the reinforcing layer (2) on the outer surface (3) of the top wooden veneer sheet (4).

5. The plywood according to any one of claims 1 to 3, **characterized in that** the stack of the layers of the plywood (1) comprises the reinforcing layer (2) on the outer surface (3) of the top wooden veneer sheet (4) and on the outer surface (3) of a bottom wooden veneer sheet (14).

6. The plywood according to any one of claims 1 to 3, **characterized in that** the stack of the layers of the plywood (1) comprises the reinforcing layer (2) between the top (4) and a second top (15) wooden veneer sheet.

7. The plywood according to any one of claims 1 to 3, **characterized in that** the stack of the layers of the plywood (1) comprises the reinforcing layer (2) between the top (4) and the second top (15) wooden veneer sheet and between the bottom (14) and a second bottom (16) wooden veneer sheet.

8. The plywood according to any one of claims 1 to 3, **characterized in that** the stack of the layers of the plywood (1) comprises the reinforcing layer (2) between the second (15) and a third (17) top wooden veneer sheet and between the second (16) and a third bottom (18) wooden veneer sheet.

9. The plywood according to any one of claims 1 to 8, **characterized in that,** within the stack of the wooden veneer sheets (4, 5, 14, 15, 16, 17, 18) that forms the plywood (1), at least one of the wooden veneer sheets (4, 5, 14, 15, 16, 17, 18) has a direction of extension of the wooden fibres perpendicular to the direction of extension of the fibres of at least one other wooden veneer sheet (4, 5, 14, 15, 16, 17, 18) that forms the stack of the wooden veneer sheets of this plywood (1).

10. Use of the plywood (1) according to any one of claims 1 to 9 to produce cargo space floor elements of a vehicle or in the building industry for the production of a floor covering or for producing structural elements for the building industry.

11. A method of producing the plywood, comprising preparing at least one wooden veneer sheet, preparing at least one reinforcing layer, covering the surfaces of the mutually adjacent layers of the stack of the plywood with a binder, arranging the stack of the at least one wooden veneer sheet and the at least one reinforcing layer that are covered with the binder, subjecting the stack to pressing under pressure at an elevated temperature for a specified period of time, **characterized in that**
before covering with the binder and arranging the stack of the at least one wooden veneer layer and the at least one reinforcing layer (2), the reinforcing layer (2) is obtained by:
- covering the reinforcing fabric with an epoxy resin and disposing it between layers of a separating film (6) and between stops (7),
wherein the layers of the film (6), the epoxy resin-covered fabric and the stops (7) are positioned on a plate (8) and overlaid tightly with a vacuum bag (9),
wherein on the top layer of the film (6), a pressure plate (12) is arranged on which a draining fabric (13) is disposed;
- then, a negative pressure is generated within the vacuum bag (9), with a value of from -0.6 to -1.0 bar, and
- the reinforcing layer (2) is left at a temperature of 20-100°C for a period of 4-24h,
- whereupon the reinforcing layer (2) thus prepared is stacked with the wooden veneer layers,
wherein the binder is spread between the successive layers of the stack,
- whereupon the stack of the layers thus prepared is subjected to a pressure of 12-18 bar at a temperature of 120-130°C for a period of 15-25 minutes to form the plywood (1).

12. The method according to claim 11, **characterized in that** the fabric used in the method is a carbon fabric or a basalt fabric.

13. The method according to any one of claims 11 to 12, **characterized in that** the adhesive used in the method is a phenol-formaldehyde resin-based adhesive or a lignin adhesive.

14. The method according to any one of claims 11 to 13, **characterized in that** within the stack of the wooden veneer sheets (4, 5, 14, 15, 16, 17, 18) that forms the plywood (1), at least one of the wooden veneer sheets (4, 5, 14, 15, 16, 17, 18) has a direction of extension of the wooden fibres perpendicular to the direction of extension of the fibres of at least one other wooden veneer sheet (4, 5, 14, 15, 16, 17, 18) that forms the stack of the wooden veneer sheets of this plywood (1).

15. Use of the plywood (1) obtained by the method according to any one of claims 11 to 14 to produce cargo space floor elements of a vehicle or in the building industry for the production of a floor covering or for producing structural elements for the building industry.
